# EUROPEAN PATENT SPECIFICATION

(11) **EP 2 662 659 B1**
(45) Date of publication and mention of the grant of the patent: **21.01.2015**
(21) Application number: 12167180.4
(22) Date of filing: 08.05.2012
(51) Int. Cl.: G01B 3/56, G01B 5/00, G01B 5/02, G01B 11/00, G01B 11/02, B43L 7/027

(54) **Device for measuring a geometric characteristic of an object**
Vorrichtung zur Messung eines geometrischen Merkmals eines Objekts
Dispositif pour mesurer une caractéristique géométrique d'un objet

(43) Date of publication of application: 13.11.2013
(73) Proprietor: Hossary, Ralph John, Taipei 115 (TW)
(72) Inventor: Hossary, Ralph John, Taipei 115 (TW)
(74) Representative: O'Callaghan, Robert James

(56) References cited:
- EP-A1- 2 437 037
- WO-A1-93/01467
- WO-A2-2012/021081
- US-A- 4 268 967
- US-A1- 2008 140 234
- US-A1- 2008 301 962
- US-B1- 7 293 368

## Description

The present invention relates generally to a measuring device, and more specifically to a measuring device and a method for estimating a geometric characteristic of an object.

In the air transportation industry, courier companies often use the size of an object to calculate its fees. That is, instead of using its weight, an object's volume is used to calculate its associated transportation fees. To calculate the volume of an object, courier companies need to estimate and multiply the length, width and height of the object.

One practice for estimating a length of an object is to manually use a measuring tape or a ruler. However, such practice lacks efficiency, because a user needs to fix one end of the measuring tape to one end of the object, scrolling the measuring tape to align the measuring tape's length marking to the object's opposite end and reading and recording the length measurement. Another practice involves using a laser scanner to measure an object's volume at a particular location. However, such practice is costly and time-consuming because the object has to be moved to the particular location. Therefore, there is a need in the art for a measuring device and method that provide the user convenience and flexibility in measuring geometric characteristics of an object.

WO93/01467 discloses a method and device for measuring the dimensions of a three dimensional object.

EP2437037 discloses an apparatus including an orthogonal reference support comprising three references.

US7293368 discloses a measuring system comprising four strips, which are references.

WO2012/021081 discloses a device for measuring the length, width and height of an object.

US2008/301962 discloses an apparatus comprising two L shaped squares which are pivotally connected.

US4268967 discloses a device which comprises two pairs of walls, with sliding interconnections provided between the wall members.

US2008140234 discloses a method in which the size of an object in an image is determined from a scale using a reference object in the image.

The present invention provides a measuring device and method that allow a user to easily measure geometric characteristics of an object. According to a first aspect of the invention, there is provided a measuring device according to claim 1. In one embodiment of the present invention, the measuring device includes a first reference corresponding to a first edge of a target object, a second reference corresponding to a second edge of the target object, and a third reference corresponding to a third edge of the target object, whereas at least one geometric characteristic of the target object can be estimated by comparing the first reference with the first edge, the second reference with the second edge, and the third reference with the third edge. Each "reference" may comprise a reference part or reference member. In one embodiment of the present invention, the references are branches or arms of the measuring device. The branches may be configured to conform to the exterior shape of an intended target object. In one embodiment of the present invention, the references are formed by the connecting edges of three boards. In one example, the measuring method first receives an image of a target object and a measuring device, wherein the measuring device comprises a first reference corresponding to a first edge of a target object, a second reference corresponding to a second edge of the target object, and a third reference corresponding to a third edge of the target object. Then, the measuring method extracts from the image a first reference distance corresponding to the first reference, a second reference distance corresponding to the second reference, a third reference distance corresponding to the third reference, a first edge distance corresponding to the first edge, a second edge distance corresponding to the second edge, a third edge distance corresponding to the third edge. Thereafter, the measuring method compares the first reference distance with a first reference length, the second branch reference with a second reference length, and a third reference distance with a third reference length, thereby producing at least one comparison result. Finally, the measuring method may estimate at least one geometric characteristic of the target object according to the first edge distance, the second edge distance, the third edge distance, and the at least one comparison result. In some embodiments of the present invention, the geometric characteristic of a target object may be its length, width, height, volume, or characteristic based on its length, width, height, or volume.

It should be understood, however, that this Summary may not contain all aspects and embodiments of the present invention, that this Summary is not meant to be limiting or restrictive in any manner, and that the invention as disclosed herein will be understood by one of ordinary skill in the art to encompass obvious improvements and modifications thereto.

The accompanying drawings illustrate one or more embodiments of the invention and together with the written description, serve to explain the principles of the invention. Wherever possible, the same reference numbers are used throughout the drawings to refer to the same or like elements of an embodiment, and wherein:
FIGs. 1A and 1B are schematic illustrations of the measuring device and the target object according to one example;
FIG. 2 is a schematic illustration of the measuring device and the target object according to one example;
FIGs. 3A to 3D are schematic illustrations of the three-dimensional structure of the measuring device according to some examples;
FIGs. 4A to 4E are schematic illustrations of the measuring device with its branches formed by geometric boards, according to some examples;
FIGs. 5A to 5E are schematic illustrations of the measuring device with markings according to some examples;
FIGs. 6A and 6B are schematic illustrations of the measuring device with markings according to some examples;
FIGs. 7A and 7B are schematic illustrations of the measuring device with extendable branch according to some examples;
FIGs. 7C-7F are schematic illustrations of the measuring device with a folding mechanism according to some embodiments of the present invention.
FIG. 8 is a schematic illustration of a computing device to cooperate with the measuring device according to one example; and
FIGs. 9A, 9B and 9C are flowcharts illustrating methods for measuring the length, the width, the height and/or the volume of the target object according to some examples;
FIG. 10 is a schematic illustration of how the measuring device and the edges of the target object may be identified from a captured image.

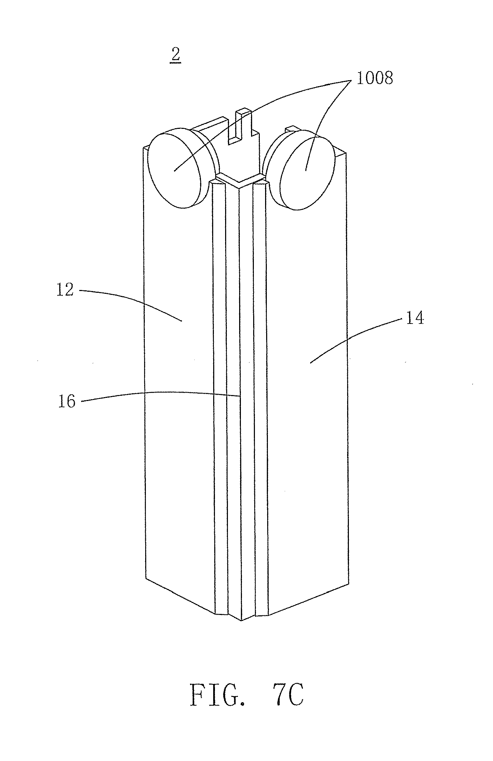

The present invention will now be described more fully hereinafter with reference to FIGs. 7C-7F, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention as defined by the appended claims to those skilled in the art. Like reference numerals refer to like elements throughout.

The description will be made as to the embodiments of the present invention in conjunction with the accompanying drawings in FIGS. 7C-7F. Reference will be made to the drawing figures to describe the present invention in detail, wherein depicted elements are not necessarily shown to scale and wherein like or similar elements are designated by same or similar reference numeral through the several views and same or similar terminology.

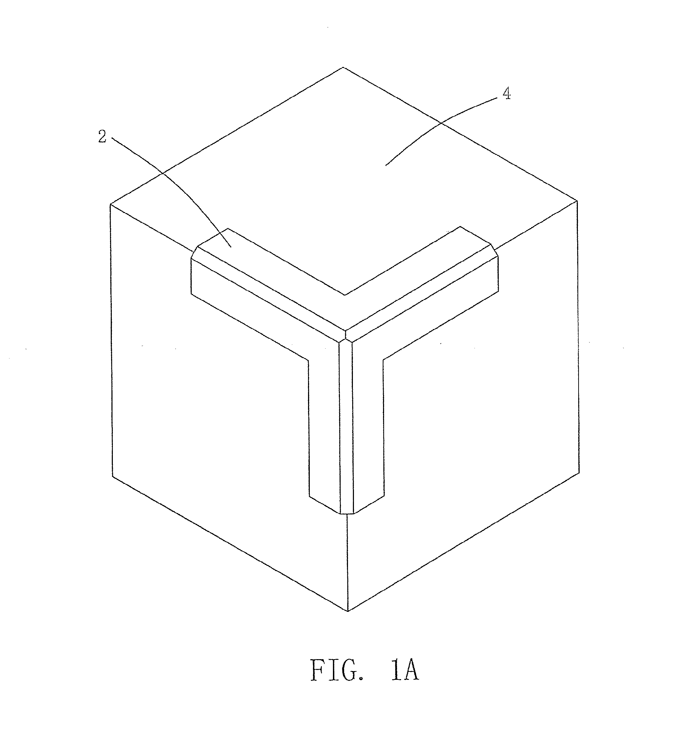

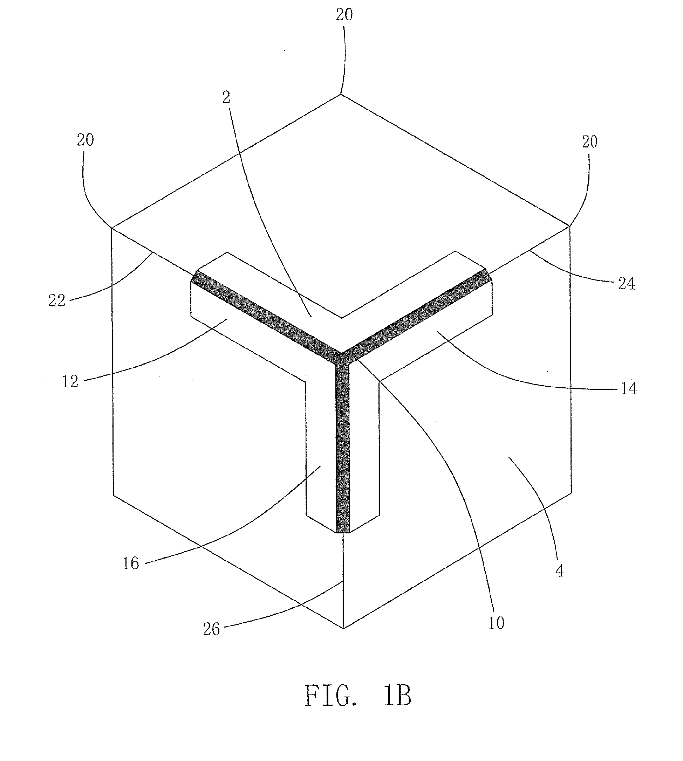

FIGs. 1A and 1B are schematic illustrations of the measuring device and the target object according to one example.

FIG. 1A is an illustration of the measuring device 2 and the target object 4 according to one example. In FIG. 1A, the measuring device 2 may be positioned substantially adjacent to the target object 4 by a user, which may be a user of the measuring device and/or the measuring method thereof. The target object 4 may be, but is not limited to, a box, a carton, a container, a case, an item, or the combination thereof. In FIG. 1A, the shape of the target object 4 may preferably be rectangular, but the present invention is not so limited. Instead, the shape of the target object 4 may be a cube, a prism, a cuboid, a hexahedron, a polyhedron, or any three-dimensional geometric solid.

FIG. 1B is an illustration of the measuring device 2 and the target object 4 according to one example. As illustrated, the measuring device 2 may have branches 12, 14 and 16. When the measuring device 2 is positioned substantially adjacent to the target object 4, the branches 12, 14 and 16 may be substantially aligned with the edges of the target object 4. For example, the branch 12 may be positioned alongside the edge 22, the branch 14 may be positioned alongside the edge 24, and the branch 16 may be positioned alongside the edge 26. The branches 12, 14 and 16 may have different lengths and their lengths may be predetermined and/or known to the user. In some examples, the branches 12, 14 and 16 may have the same length, and such length is known to the user. When the lengths of the branches 12, 14, and 16 are known, the lengths of the edges 22, 24, and 26 may be estimated by comparing them to the lengths of the corresponding branches of the measuring device 2. Thereafter, the volume of the target object 4 may be calculated according to the estimated lengths of the edges 22, 24 and 26.

In addition, the measuring device 2 may have an engaging part 10 connected to the branches 12, 14 and 16. Alternatively, the engaging part 10 may be formed by at least part of the branches 12, 14 and/or 16. The engaging part 10 may be used to fix the measuring device 2 onto the target object 4. For example, the engaging part 10 may be placed substantially onto the vertex 20 of the target object 4. A person of ordinary skill in the art would appreciate that the engaging part 10 of the measuring device 2 may be fixed onto each vertex of the target object 4 as long as branches of the measuring device 2 may be substantially alongside edges of the target object 4.

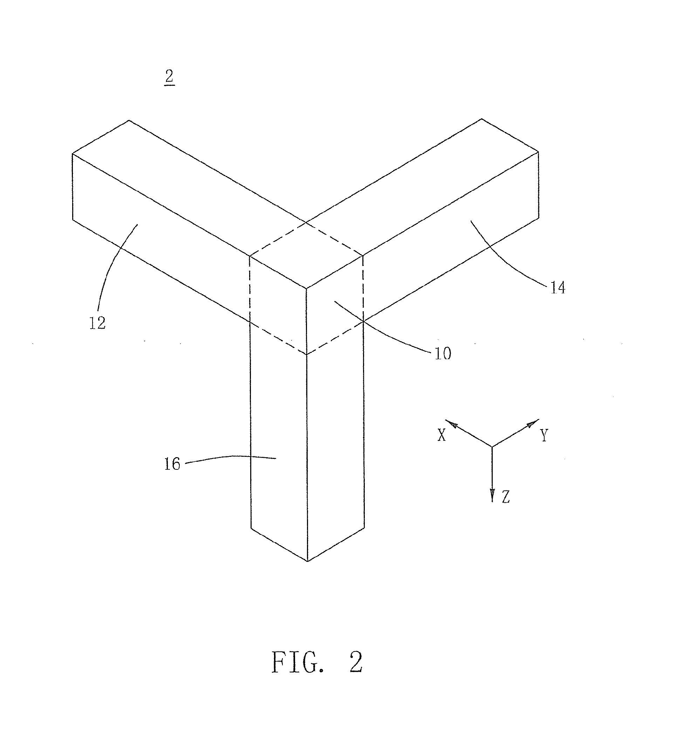

FIG. 2 is a schematic illustration of the measuring device 2 and the target object 4 according to one example. Referring to FIG. 2, the principal directions of the branches 12, 14 and 16 may be substantially perpendicular to each other. That is, the branches 12, 14 and 16 may be substantially aligned with the x-axis, the y-axis and the z-axis in a Cartesian coordinate system, respectively. Such structure may enable the measuring device 2 to be substantially positioned adjacent to the target object 4, as illustrated in FIGs. 1A and 1B. As previously mentioned, the lengths of the branches 12, 14 and 16 may be different.

In addition, as illustrated in FIG. 2, the engaging part 10 may be formed by part of the branches 12, 14 and 16. Alternatively, the engaging part 10 may be a separate unit connected to the branches 12, 14 and 16.

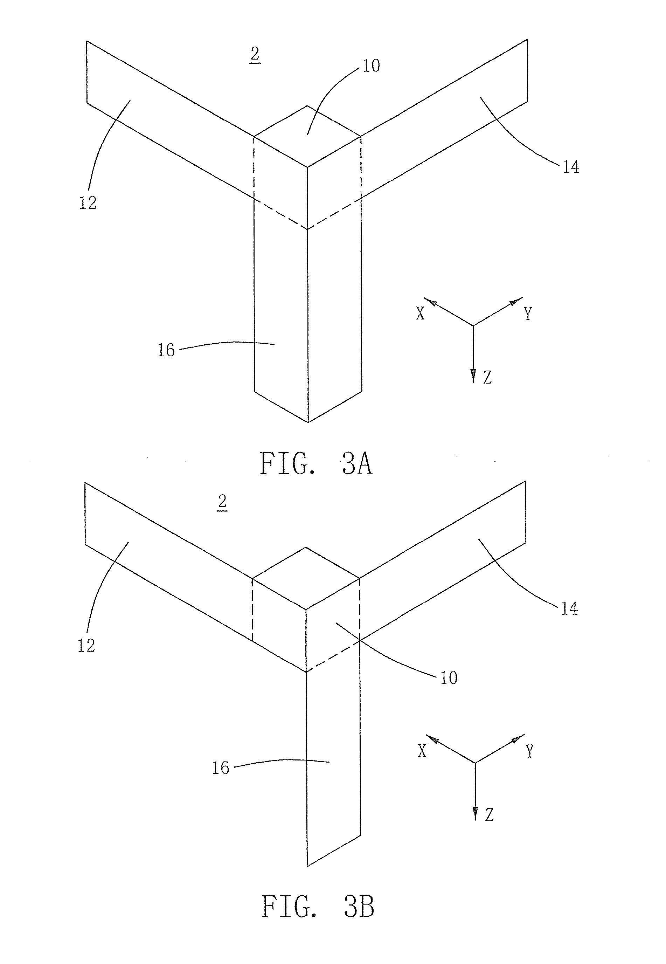

FIGs. 3A to 3D are schematic illustrations of the three-dimensional structure of the measuring device according to some examples.

FIG. 3A is a schematic illustration of the three-dimensional structure of the measuring device 2 according to one example. As illustrated, the branches 12, 14 and/or 16 may have structures different from each other. For example, the branches 12 and 14 may each be one substantially flat board for positioning over an edge-forming surface of the target object 4, and branch 16 may have two substantially flat boards for positioning over an edge-forming surface of the target object 4. The two substantially flat boards of the branch 16 may be substantially perpendicular to each other. In one example, the substantially flat board of the branch 12 may be on the same plane as one of the substantially flat boards of the branch 16, and the substantially flat board of the branch 14 may be on the same plane as the other substantially flat boards of the branch 16, as illustrated in FIG. 3A.

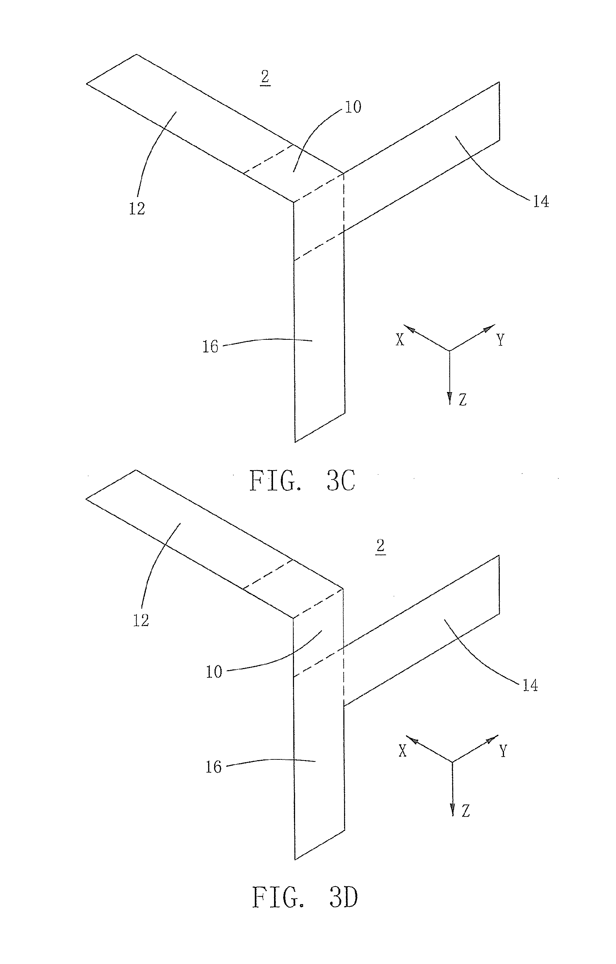

In another example, as illustrated in FIG. 3B, the branches 12, 14 and 16 may each be one substantially flat board for positioning alongside an edge of the target object 4. FIG. 3C is another example illustrating the structures of the branches 12, 14 and 16. In one example, lengths of the branches 12, 14 and 16 may be different. It should be understood that the structures of the branches 12, 14 and 16 are not so limited. The structures of the branches 12, 14 and 16 may be any structure enabling the branches 12, 14 and 16 to be substantially positioned alongside the edges 22, 24 and 26 of the target object 4.

Referring now to FIGs. 3A, 3B and 3C, the measuring device 2 may have an engaging part 10 connected to the branches 12, 14 and 16. Alternatively, the engaging part 10 may be formed by part of the branches 12, 14 and 16. FIG. 3A illustrates an example of the engaging part 10 being connected to or being formed by all three of the branches 12, 14 and 16. FIG. 3B illustrates another example of the engaging part 10 being connected to or being formed by all three of the branches 12, 14 and 16. FIG. 3C illustrates yet another example of the engaging part 10 being connected to or being formed by all three of the branches 12, 14 and 16. However, the engaging part 10 may not need to be formed by all three of the branches 12, 14 and 16.

FIG. 3D is an example illustrating the engaging part 10 not being connected to or being formed by all three of the branches 12, 14 and 16. In this embodiment, the engaging part 10 may be connected to or formed by the branch 12 and the branch 16, and the branch 14 may be connected to the branch 16. That is, it is possible that the branch 14 is not connected to, or does not participate in forming, the engaging part 10.

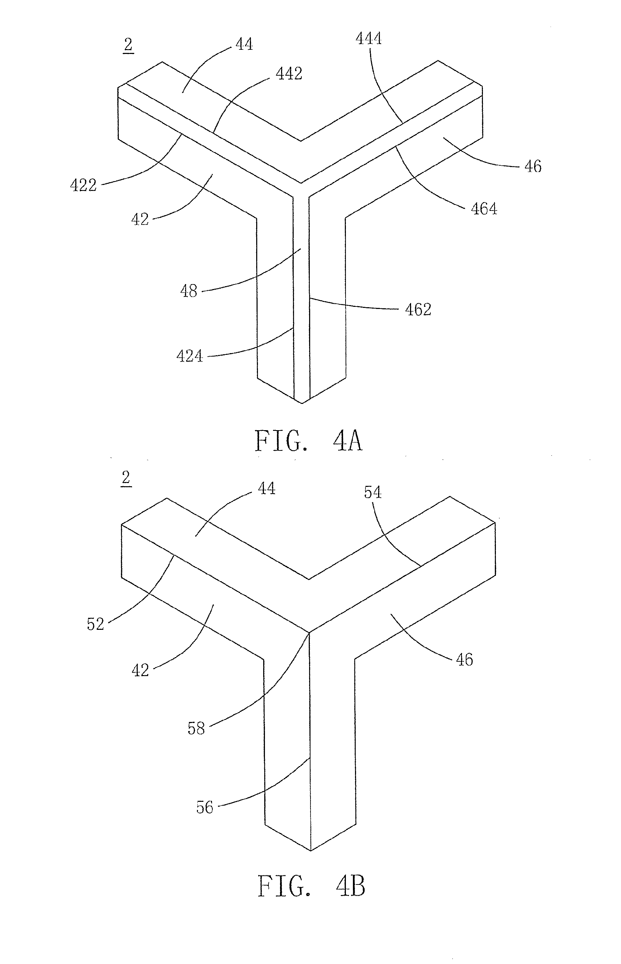

FIGs. 4A to 4E are schematic illustrations of the measuring device with its branches formed by geometric boards, according to some examples.

FIG. 4A is a schematic illustration of the measuring device 2 according to one example. In the present example, the measuring device 2 may be formed by three substantially L-shaped boards 42, 44 and 46. The three substantially L-shaped boards 42, 44 and 46 may be configured such that the connecting edge 422 may be directly or indirectly connected to the connecting edge 442, the connecting edge 444 may be directly or indirectly connected to the connecting edge 464, and the connecting edge 462 may be directly or indirectly connected to the connecting edge 424. Preferably, the lengths of the connecting edge 422 and the connecting edge 442 may be substantially the same, the lengths of the connecting edge 444 and the connecting edge 464 may be substantially the same, and the lengths of the connecting edge 462 and the connecting edge 424 may be substantially the same. However, in another example, the lengths of the connecting edge 422 and the connecting edge 442 may be different, the lengths of the connecting edge 444 and the connecting edge 464 may be different, and/or the lengths of the connecting edge 462 and the connecting edge 424 may be different. In such examples, the lengths of the longer connecting edges may be known to the user to more easily utilize the measuring device and/or the measuring method thereof.

In one example, the connecting edge 422 may not directly connect to the connecting edge 442, the connecting edge 444 may not directly connect to the connecting edge 464, and the connecting edge 462 may not directly connect to the connecting edge 424. That is, the three substantially L-shaped boards 42, 44 and/or 46 may be joined by a bonding part 48, as illustrated in FIG. 4A. In some examples, the material of the bonding part may be an adhesive substance, such as glue or a magnetic substance. It is appreciated that the material of the bonding part 48 and how the bonding part 48 joins the three substantially L-shaped boards 42, 44 and/or 46 are not so limited. A personal having ordinary skill in the art would appreciate that the present invention applies to other material suitable for forming the bonding part 48 and other means for joining the bonding part 48 with the three substantially L-shaped boards 42, 44 and/or 46.

In addition, the corresponding connecting edges of the substantially L-shaped boards 42, 44 and 46 may be directly connected, as illustrated in FIG. 4B. In this example, the connected edges 52, 54 and 56 may substantially align with the x-axis, y-axis and z-axis in a Cartesian coordinate system, respectively. Preferably, the lengths of the connected edges 52, 54 and 56 may be known to the user for estimating a geometric characteristic of the target object 4.

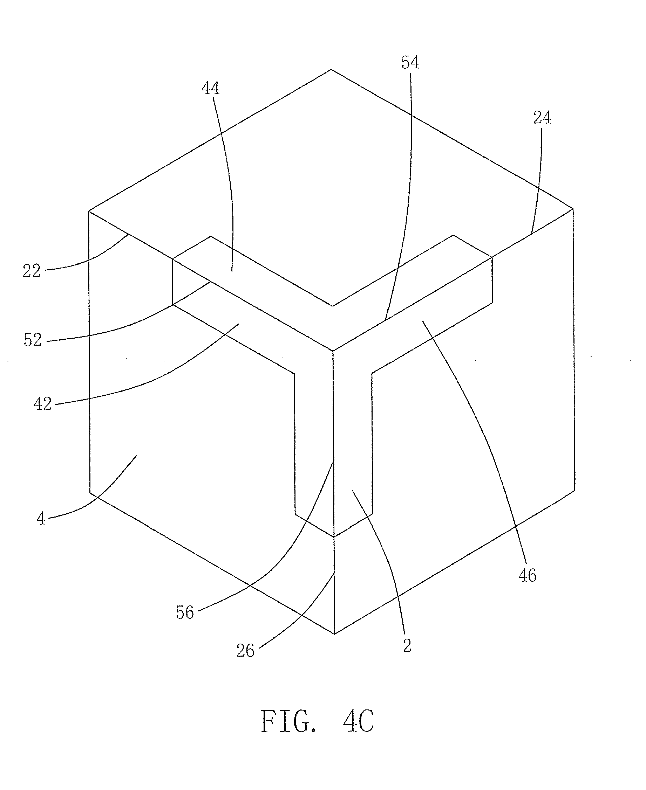

Moreover, a vertex 58 may be formed at the intersection of the connected edges 52, 54 and 56. As illustrated in FIG. 4C, when using the measuring device 2, the user may dispose the vertex 58 onto a vertex of the target object 4, such that the connected edges 52, 54 and 56 may be substantially aligned with the corresponding edges of the target object 4. As a result, a geometric characteristic of the target object 4 may be estimated. For example, the lengths of the edges 22, 24 and 26 of the target object 4 may be estimated and the volume of the target object 4 may be calculated.

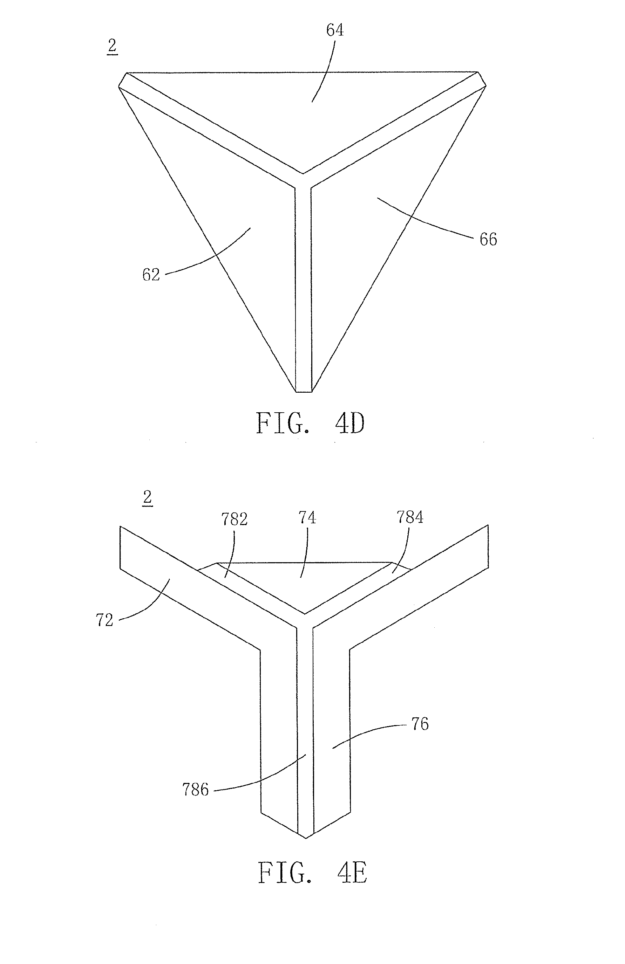

It is to be noted that a person of ordinary skill in the art would appreciate that boards with other geometric shapes may be used to form the measuring device 2. For example, in the example illustrated in FIG. 4D, the measuring device 2 may be formed by three substantially triangular boards 62, 64 and 66. In yet another example, as illustrated in FIG. 4E, the measuring device 2 may be formed by two substantially L-shaped boards 72 and 76, and one substantially triangular board 74. The operation of these different shaped boards is the same and can be appreciated by a person having ordinary skill in the art. For example, in FIG. 4E, the connected edges 782, 784 and 786 may be substantially aligned with the x-axis, y-axis and z-axis in a Cartesian coordinate system, respectively. Preferably, the lengths of the connected edges 782, 784 and 786 may be known to the user for estimating a geometric characteristic of the target object 4.

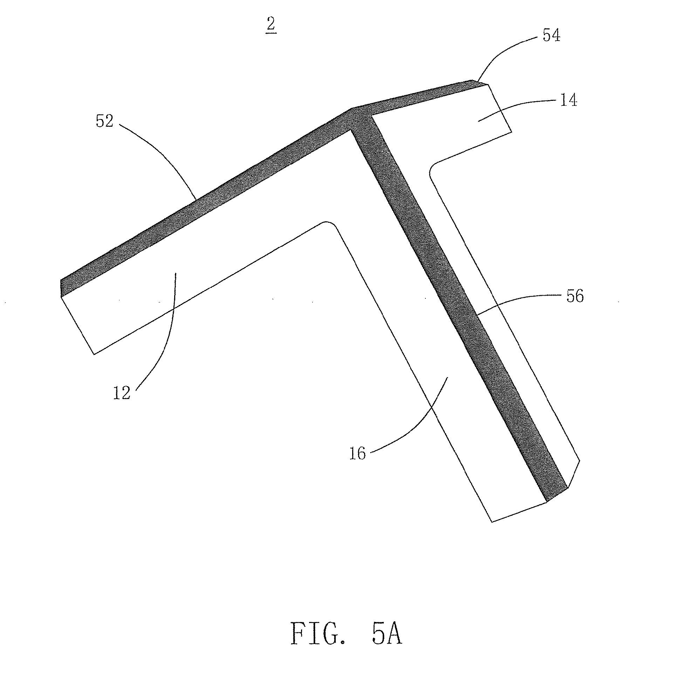

FIGs. 5A-5E are schematic illustrations of the measuring device with markings according to some examples.

In one example, as illustrated in FIG. 5A, the measuring device 2 may have markings on part of its outer exterior. The markings may preferably have contrasting colors with respect to the remaining part of the measuring device 2 so that a user may easily distinguish the reference lengths of the branches 12, 14 and 16. In addition, the marking may preferably have contrasting colors with respect to a target object so that a user may easily distinguish the reference lengths of the branches 12, 14 and 16. For example, the color of the markings may be red, and the color of the remaining part of the measuring device 2 may be grey. Referring to FIG. 5A, the markings may be substantially aligned with the connected edges 52, 54 and 56. However, the positions of the markings are not so limited. A personal of ordinary skill in the art would appreciate that the markings may be deployed at any position of the branches 12, 14 and 16 as long as the markings may enable a user to easily distinguish the reference lengths of the branches 12, 14 and 16. It is to be noted that the reference lengths described in the examples may be of any style, form, shape or length capable of enabling the user to estimate the lengths of the branches or the connected edges. For example, in FIG. 2, the references may be branches 12, 14 and 16, and the reference lengths may be their associated lengths. In another example, in FIG. 4B, the references may be the connected edge 52, 54 and 56, and the reference lengths may be lengths of the connected edges 52, 54 and 56.

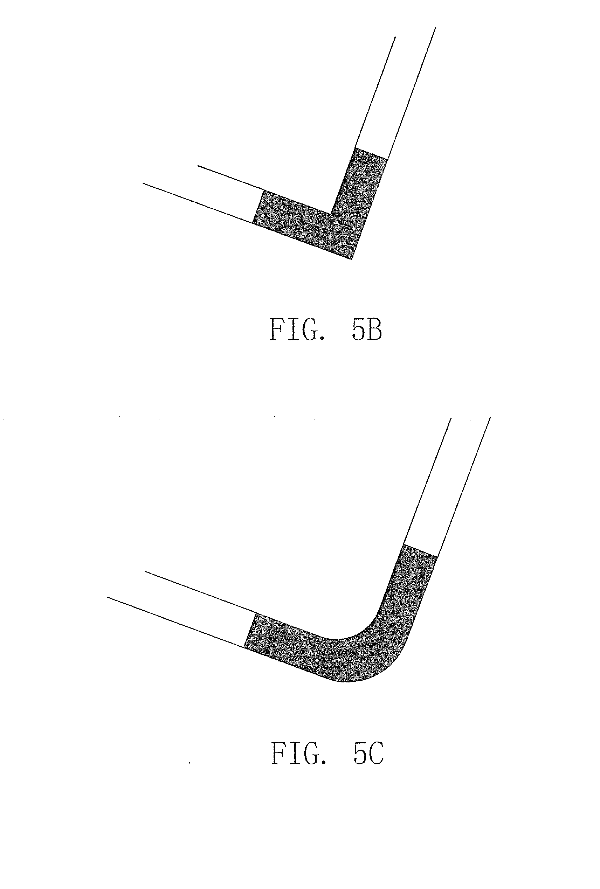

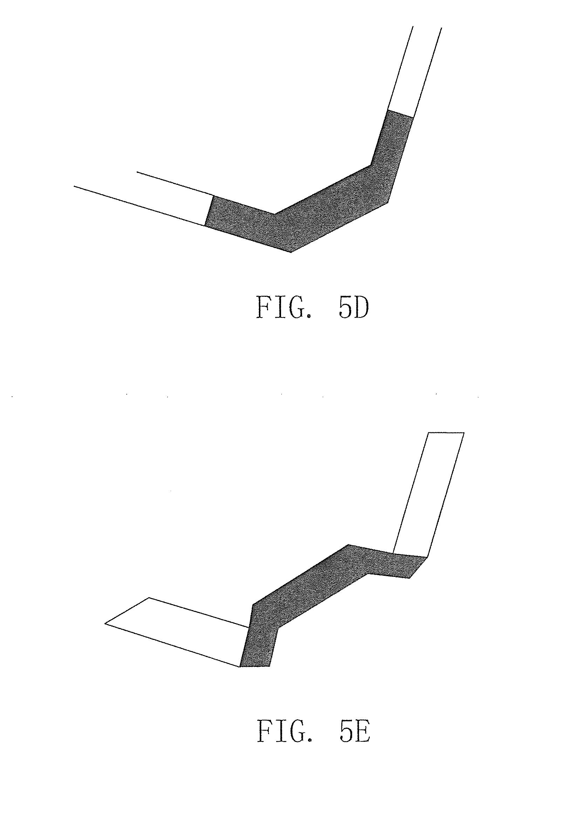

In some examples, the bonding part 48 or the connected edges 52, 54 and 56 may have different shapes, as illustrated in FIGs. 5B-5E. For example, the shape of the bonding part or the connecting edges of the measuring device may be a peak-like cutting edge (FIG. 5B), a rounded edge (FIG. 5C), a narrow plane (FIG. 5D), a concave edge (FIG. 5E), or any other shapes suitable to carry out the present invention.

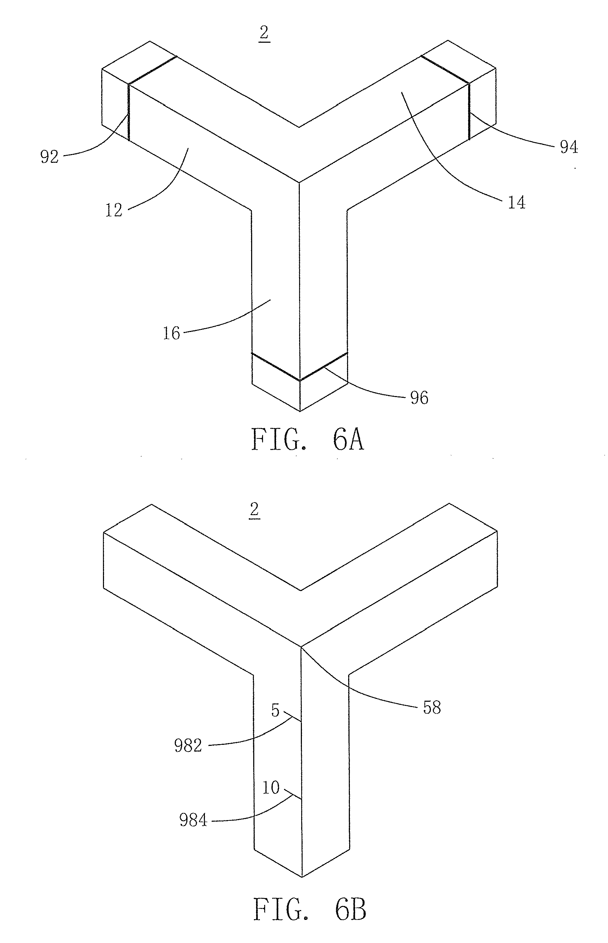

FIGs. 6A and 6B are schematic illustrations of the measuring device with markings according to some examples.

Referring to FIG. 6A, in this example, the measuring device 2 may have markings 92, 94 and 96 on its branches 12, 14 and 16. However, these markings are not required for all three branches 12, 14 and 16. In addition, the markings 92, 94 and 96 may have different styles from each other. (Not illustrated.) In FIG. 6A, the markings 92, 94 and 96 may be close to the end of the branches 12, 14 and 16. However, the present invention is not so limited. Instead, the markings 92, 94 and 96 may be located anywhere on the branches 12, 14 and 16. The markings 92, 94 and 96 may provide consistent reference lengths to the user. Another benefit of the markings 92, 94 and 96 is that when the markings 92, 94 and 96 are worn off, it may alert the user that the measuring device 2 may no longer provide substantially precise reference lengths.

Alternatively, the marking on the measuring device may be a scale, as illustrated in FIG. 6B. In FIG. 6B, the marking 982 may have a short marking line and a numerical symbol "5", indicating that the distance between the vertex 58 and the marking line of the marking 982 is five centimeters. Similarly, the marking 984 may have a short marking line and a numerical symbol "10", indicating that the distance between the vertex 58 and the marking line of the marking 984 is ten centimeters. It should be appreciated that FIG. 6B is intended only to illustrate one example of the measuring device 2 with scale, and different scales may be employed by any of the branches 12, 14 and 16 of the measuring device 2.

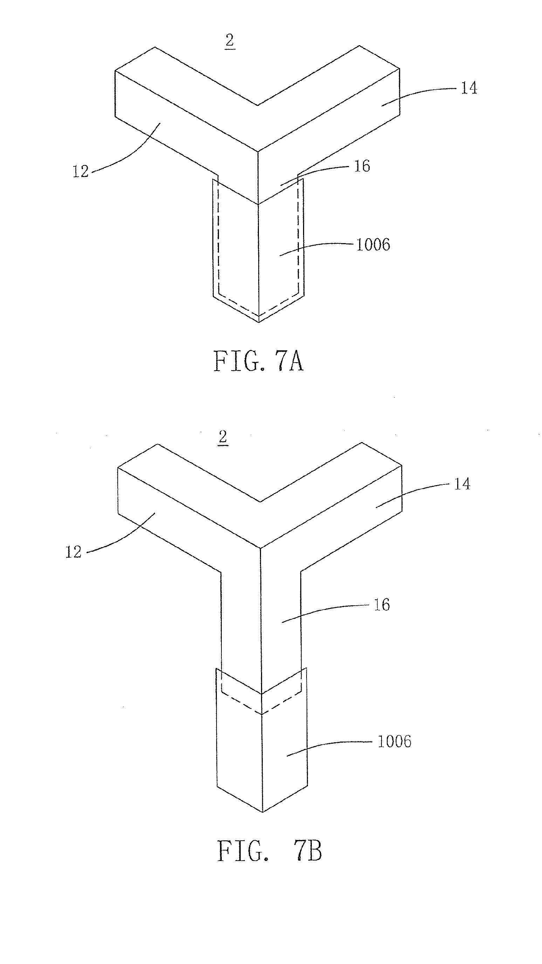

FIGs. 7A and 7B illustrate the measuring device 2 with a movable component of an extending part 1006 according to one example. Referring to FIG. 7A, the branch 16 may have an extending part 1006 for extending the length of the branch 16. The extending part 1006 may be of similar shape as the branch 16, or may be larger than branch 16, as illustrated in FIG. 7A. When the extending part 1006 remains at its initial position, a part of branch 16 may not be visible to the user, as illustrated in FIG. 7A. When the movable part is moved to a extending position, as illustrated in FIG. 7B, the length of the branch 16 is extended. Thus, the total length of the branch 16 and with the extending part 1006 in the extending position is comparatively longer than the total length of branch 16 with the extending part 1006 in the initial position. Similarly, the dimension of the extending part 1006 may be smaller than the branch 16 so that it may be partially hidden in its initial position, and may extend the length of the branch 16 when moved to the extending position. (Not illustrated). It should be appreciated that the branches 12 and 14 may also have similar extending parts for extending their lengths. In addition, a person of ordinary skill in the art would appreciate that there are various means for fixing the extending part 1006 to the branch 16. For example, the extending part may be folded toward its branch, and the total length of the branch may be extended by unfolding the extending part.

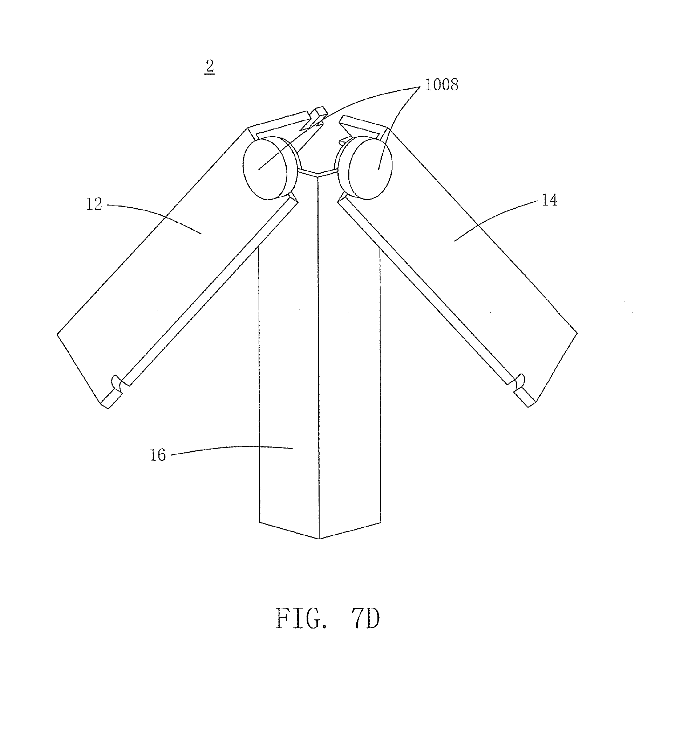

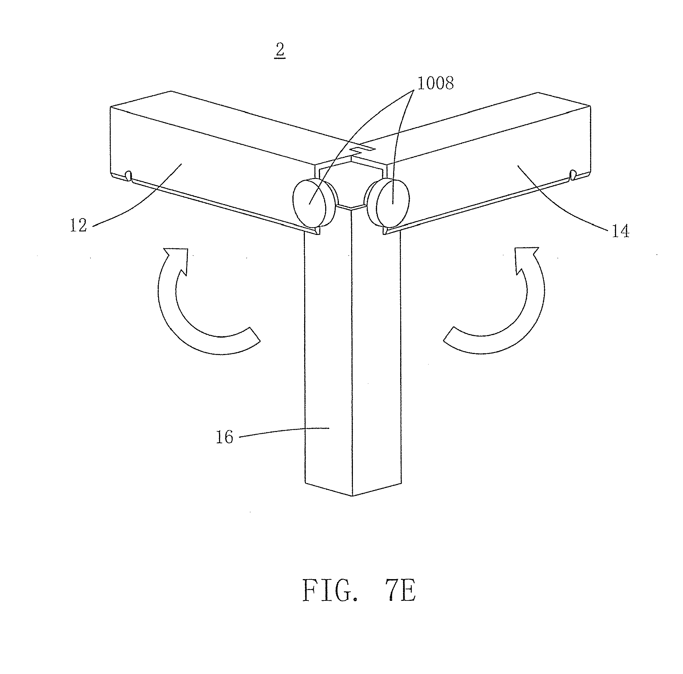

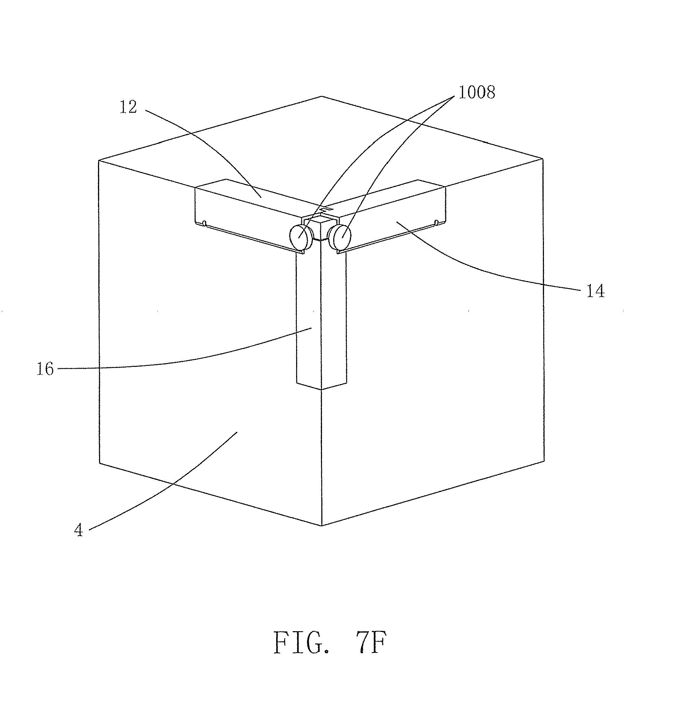

FIGs. 7C-7F illustrate the measuring device 2 with a folding mechanism according to some embodiments of the present invention. Referring to FIG. 7C, the folding mechanism may be knobs 1008. Referring to FIG. 7C, the branch 12 may be movably connected to the branch 16 by a knob 1008, and the branch 14 may be movably connected to the branch 16 by another knob 1008. As illustrated in FIG. 7C, the measuring device 2 is in a substantially folded position, wherein the branch 12 and the branch 14 may be substantially parallel to the branch 16, respectively. Referring to FIG. 7D, the knobs 1008 may enable the branches 12 and 14 to be rotated. Accordingly, the branch 12 may be in a position between substantially parallel to the branch 16 and substantially perpendicular to the branch 16. The branch 14 may be in a position between substantially parallel to the branch 16 and substantially perpendicular to the branch 16. When the measuring device 2 is in a substantially unfolded position, as illustrated in FIG. 7E, the knobs 1008 may enable the branches 12 and 14 to be rotated to be substantially perpendicular to the branch 16, respectively. Consequently, the measuring device 2 may be positioned substantially adjacent to the target object 4, as illustrated in FIGs. 1A, 1B and 7F. It is to be noted that the folding mechanism may be any component enabling the branches 12, 14 and/or 16 to be rotated comparatively, such as a knob, a pop rivet, a stud, a pivot or a hinge, but the present invention is not so limited.

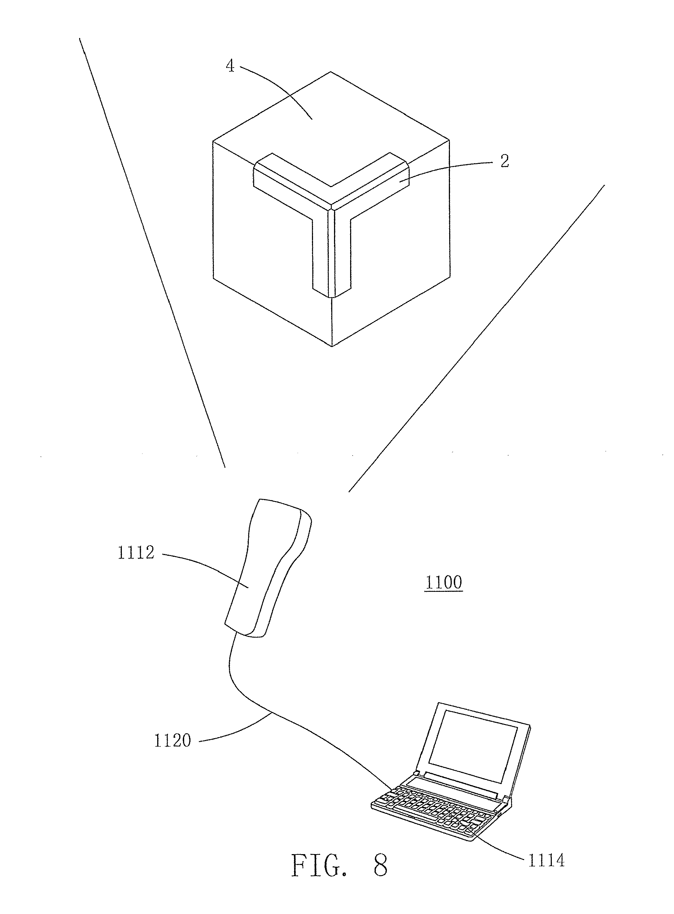

FIG. 8 is a schematic illustration of a computing device to cooperate with the measuring device according to one example.

Referring to FIG. 8, a computing device 1100 may capture the image of the measuring device 2 and the target object 4 when the measuring device 2 is positioned substantially adjacent to the target object 4.

In one example, the computing device 1100 may have an imaging module 1112 and a processing module 1114. The imaging module 1112 may include a CMOS or CCD based camera or other optical and/or mechanical designs, which may enable the computing device 1100 to acquire a captured image of the target object 4 and the measuring device 2. The captured image is transmitted to the processing module 1114 to estimate the length, width, height and/or the volume of the target object 4. The processing module 1114 may be any kind of computing devices capable of calculating the length, width, height and/or the volume of the target object 4. For example, the processing module 1114 may be an image processor with a storage unit, an application-specific integrated circuit (ASIC), or a computer, but the present invention is not so limited.

In addition, the computing device 1100 may have a display module for displaying the estimated results of the processing module 1114. The display module may have at least a screen, which may be a touch screen, and may use the LCD (light crystal display) or the LPD (light emitting polymer display) technology, or any display technology suitable for presenting the result of the estimated results by the processing module 1114. Moreover, the computing device 1100 may also have a storage module to record the estimated results. The storage module may be any computer readable medium, including, but not limited to, a random access memory (RAM), read only memory (ROM), programmable read only memory (PROM), erasable programmable read only memory (EPROM), electronically erasable programmable read only memory (EEPROM), flash memory, a hard disk, a solid state drive (SSD), a compact disc ROM (CD-ROM), a floppy disk, a cassette, magnetic media, optical media, or other computer readable media. The storage module may be incorporated into the processing module 1114.

Furthermore, the computing device 1100 may have a communication module 1120 for transmitting the captured image from the imaging module 1112 to the processing module 1114. The communication module 1120 may be a transmission line (one-way or two-way), a wireless communication module, or inter-circuit connection lines. In addition, it may be part of the computing device 1100 and/or the imaging module 1112. The communication module 1120 may utilize any communications standards, protocols and technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), Wi-MAX, or any other suitable communication protocol, including communication protocols not yet developed as of the filing date of this document.

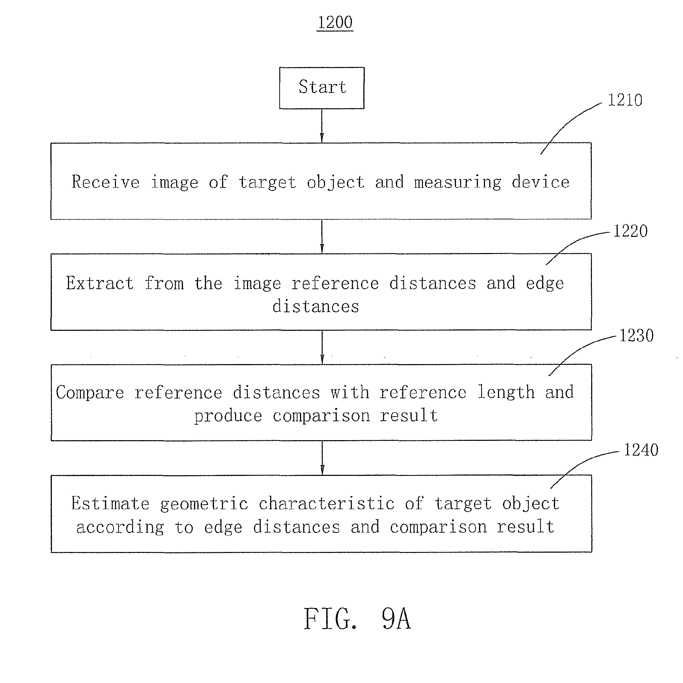

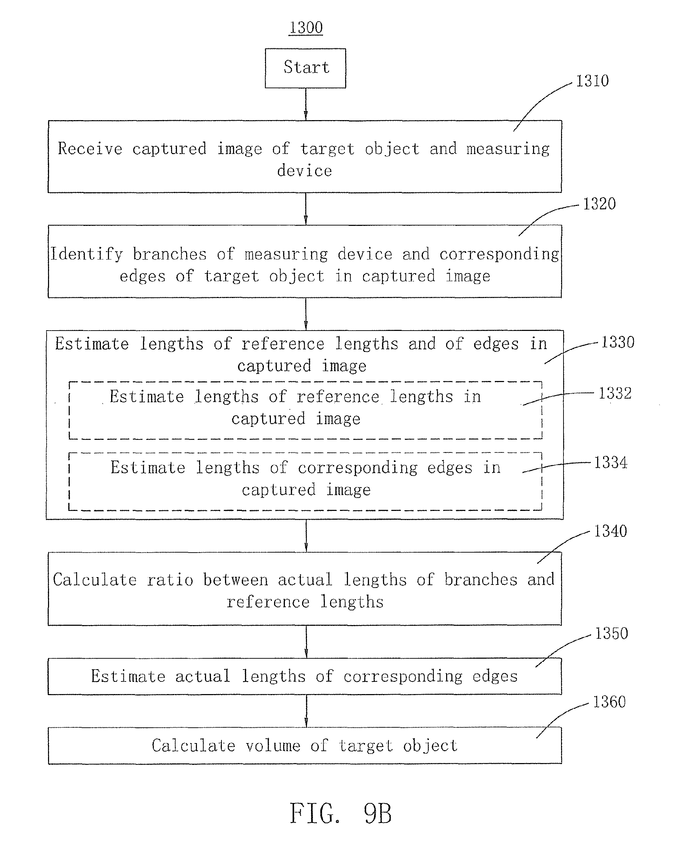

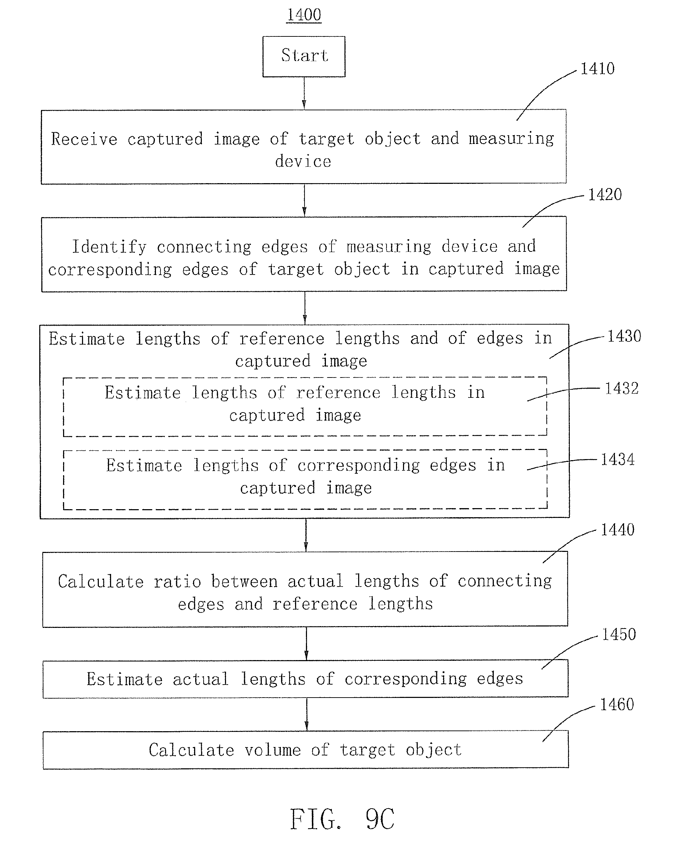

FIGs. 9A, 9B and 9C are flowcharts illustrating methods for measuring the length, the width, the height and/or the volume of the target object according to some examples.

Referring to FIG. 9A, in step 1210, in one example, the measuring method 1200 may receive an image of a target object and a measuring device, wherein the measuring device comprises a first reference corresponding to a first edge of a target object, a second reference corresponding to a second edge of the target object, and a third reference corresponding to a third edge of the target object. In step 1220, the measuring method may extract from the image a first reference distance corresponding to the first reference, a second reference distance corresponding to the second reference, a third reference distance corresponding to the third reference, a first edge distance corresponding to the first edge, a second edge distance corresponding to the second edge, a third edge distance corresponding to the third edge. In step 1230, the measuring method may compare the first reference distance with a first reference length, the second branch reference with a second reference length, and a third reference distance with a third reference length, thereby producing at least one comparison result. For example, the comparison result may include the ratios associated with the reference distances and the edge distances. As previously described, the user may have knowledge of lengths of the first, second and third references. Accordingly, these information may allow the user to compute the size of the target object. In step 1240, the measuring method 1200 may estimate at least one geometric characteristic of the target object according to the first edge distance, the second edge distance, the third edge distance, and the at least one comparison result.

Referring to FIG. 9B, in step 1310, a captured image of the measuring device and the target object may be received. In step 1320, the branches of the measuring device in the captured image (the "reference lengths") may be identified. In addition, corresponding edges of the target object in the captured image may also be identified. In step 1330, the reference lengths and the lengths of the corresponding edges in the captured image may be estimated. As illustrated in steps 1332 and 1334, the reference lengths and the length of each of the corresponding edges of the target object in the captured image may be estimated separately. In step 1340, the ratio between the actual lengths of the branches of the measuring device and the reference lengths may be calculated. In step 1350, the actual length of each of the corresponding edges may be estimated. Such length of each of the corresponding edges substantially may represent the length, width and height of the target object. In step 1360, the volume of the target object may be calculated by multiplying the length, width and height of the target object.

Referring to FIG. 9C, according to another example, a method for measuring the length, the width, the height and/or the volume of the target object is provided. The main difference between method 1300 and method 1400 is that the reference lengths used in method 1300 are the lengths of the branches of the measuring device, and the reference lengths used in method 1400 are the lengths of the connecting edges of the measuring device. In step 1410, a captured image of the measuring device and the target object may be received. In step 1420, the connecting edges of the measuring device in the captured image (the "reference lengths") may be identified. In addition, corresponding edges of the target object in the captured image may also be identified. In step 1430, the reference lengths and the lengths of the corresponding edges in the captured image may be estimated. As illustrated in steps 1432 and 1434, the reference lengths and the length of each of the corresponding edges of the target object in the captured image may be estimated separately. In step 1440, the ratio between the actual lengths of the connecting edges of the measuring device and the reference lengths may be calculated. In step 1450, the actual length of each of the corresponding edges may be estimated. Such length of each of the corresponding edges may substantially represent the length, width and height of the target object. In step 1460, the volume of the target object may be calculated by multiplying the length, width and height of the target object.

While the methods previously described may include a number of steps that may appear to occur in a specific order, it should be appreciated that these methods may contain more or fewer steps, that the order these steps may be exchanged, and that different steps may be combined. For example, the step 1340 may be performed prior to the step 1334, and the step 1360 may be omitted.

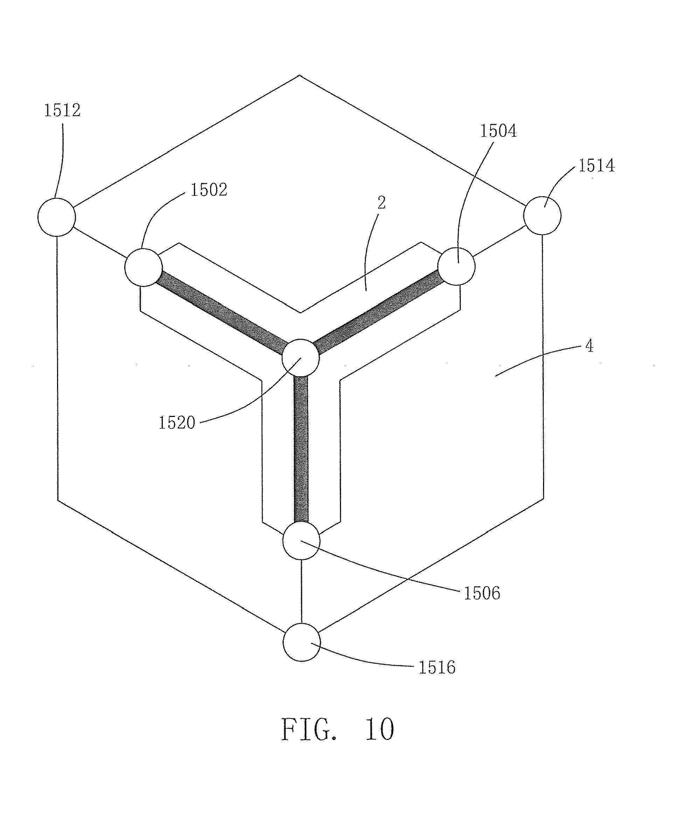

FIG. 10 is a schematic illustration of how the measuring device and the edges of the target object may be identified from a captured image.

In one example, when the reference lengths and the corresponding edges of the target object 4 in the captured image are to be identified, as described in steps 1320 and 1420, edge detection algorithms may be utilized. For example, the computing device may have the pixel information of the captured image. By analyzing such pixel information, the reference lengths and the edges of the target object 4 may be identified by comparing the contrasting colors of the pixels of the measuring device 2 and the target object 4. In addition, lengths of the reference lengths and the corresponding edges of the target object 4 may be estimated by counting the numbers of the corresponding pixels in the captured image.

In another example, as illustrated in FIG. 10, reference points may be selected to identify the reference lengths and the corresponding edges of the target object 4. For example, the computing device may provide an interface allowing the user to manually select, with a stylus or a finger, reference points in the captured image. For example, measuring device reference points 1502, 1504, 1506 and 1520 may be selected to represent tips of the branches/connecting edges of the measuring device 2. Target object reference points 1512, 1514 and 1516 may be selected to represent the vertexes of the target object 4. Alternatively, the computing device may automatically select and display the measuring device reference points 1502, 1504, 1506 and 1520 and the target object reference points 1512, 1514 and 1516. The user may then manually move a reference point to a new position in the captured image, using a stylus or a finger. Accordingly, the reference lengths and the edges of the target object may be identified by the reference points. For example, the connection between the measuring device reference points 1502 and 1520 represents a first reference length of the measuring device 2 in the captured image, and the connection between the target object reference point 1512 and the measuring device reference point 1520 represents the a first edge of the target object 4 in the captured image. Accordingly, lengths of the reference lengths and the corresponding edges of the target object 4 in the captured image may be estimated by calculating the distance between the reference points.

It is to be noted that the reference lengths described in the examples may be of any style, form, shape or length capable of enabling the user to estimate the actual lengths of the branches or the connected edges, or the lengths of the branches or the connected edges in the captured image. For example, in FIG. 2, the references may be branches 12, 14 and 16, and the reference lengths may be their associated lengths. In another example, in FIG. 4B, the references may be the connected edge 52, 54 and 56, and the reference lengths may be lengths of the connected edges 52, 54 and 56. In yet another example, in FIG. 4E, the references may be the connected edges 782, 784 and 786, and the reference lengths may be the lengths of the connected edges 782, 784 and 786. In yet another example, in FIG. 6B, the reference lengths may be the distance between the vertex 58 and the marking line of the marking 982, or the distance between the vertex 58 and the marking line of the marking 984.

It is further noted that the geometric characteristic described in the embodiments may be the target object's length, width, height, volume, or characteristic based on its length, width, height, or volume. For example, the geometric characteristic may be lengths of an edge or edges of the target object 4. In addition, the geometric characteristic may be the volume the target object 4.

Previous descriptions are only embodiments of the present invention and are not intended to limit the scope of the present invention. Many variations and modifications according to the claims and specification of the disclosure are still within the scope of the claimed invention. In addition, each of the embodiments and claims does not have to achieve all the advantages or characteristics disclosed. Moreover, the abstract and the title only serve to facilitate searching patent documents and are not intended in any way to limit the scope of the claimed invention, which is defined only by the appended claims.

## Claims

1. A measuring device (2), comprising:
a first reference (12) for alignment against a first edge (22) of a target object (4);
a second reference (14) for alignment against a second edge (24) of the target object; and
a third reference (16) for alignment against a third edge (26) of the target object;
whereby each of the first reference, the second reference, and the third reference comprises a first board and a second board connected to the first board, the first board of the first reference and the first board of the second reference are respectively rotatably connected to the first board and the second board of the third reference; and
the second board of the first reference and the second board of the second reference latch with each other to align the first reference, the second reference, and the third reference along three axes in a Cartesian coordinate system to measure geometric characteristics of the target object.

2. The measuring device according to claim 1, wherein the first reference is aligned with a x-axis direction in the Cartesian coordinate system, the second reference is aligned with a y-axis direction in the Cartesian coordinate system, and the third reference is aligned with a z-axis direction in the Cartesian coordinate system.

3. The measuring device according to claims 1 or 2, further comprising at least one reference marking on the first reference, wherein the at least one reference marking is positioned toward a tip of the first reference, to provide a consistent length measurement associated with the first reference.

4. The measuring device according to any preceding claim, further comprising an engaging part (10) adapted to fix the first reference, the second reference, and the third reference to the target object.

5. A measuring system, comprising:
a measuring device (2) according to any of claims 1 to 4;
a computing device (1100), comprising an imaging module (1112), configured to receive an image of the target object (4) and the measuring device (2); and
a processing module (1114) configured to estimate at least one geometric characteristic of the target object by extracting, from the image, comparative geometric information between the measuring device and the target object.

## Patentansprüche

1. Messvorrichtung (2), umfassend:
einen ersten Bezug (12) zur Ausfluchtung gegen eine erste Kante (22) eines Zielobjekts (4);
einen zweiten Bezug (14) zur Ausfluchtung gegen eine zweite Kante (24) des Zielobjekts; und
einen dritten Bezug (16) zur Ausfluchtung gegen eine dritte Kante (26) des Zielobjekts;
wobei jeder des ersten Bezugs, des zweiten Bezugs und des dritten Bezugs ein erstes Brett und eine zweites Brett umfasst, das mit dem ersten Brett verbunden ist, wobei das erste Brett des ersten Bezugs und das erste Brett des zweiten Bezugs jeweils drehbar mit dem ersten Brett und dem zweiten Brett des dritten Bezugs verbunden sind,
wobei das zweite Brett des ersten Bezugs und das zweite Brett des zweiten Bezugs ineinander einklinken, um den ersten Bezug, den zweiten Bezug und den dritten Bezug entlang drei Achsen in einem kartesischen Koordinatensystem auszufluchten, um geometrische Eigenschaften des Zielobjekts zu messen.

2. Messvorrichtung nach Anspruch 1, wobei der erste Bezug mit einer x-Achsenrichtung im kartesischen Koordinatensystems ausgefluchtet ist, der zweite Bezug mit einer y-Achsenrichtung im kartesischen Koordinatensystems ausgefluchtet ist und der dritte Bezug mit einer z-Achsenrichtung im kartesischen Koordinatensystems ausgefluchtet ist.

3. Messvorrichtung nach Anspruch 1 oder 2, weiter umfassend mindestens eine Bezugsmarkierung auf dem ersten Bezug, wobei die mindestens eine Bezugmarkierung gegen eine Spitze des ersten Bezugs positioniert ist, um eine konsistente Längenmessung bereitzustellen, die mit dem ersten Bezug assoziiert ist.

4. Messvorrichtung nach einem der vorhergehenden Ansprüche, weiter umfassend einen Eingriffsteil (10), der ausgelegt ist, um den ersten Bezug, den zweiten Bezug und den dritten Bezug das Zielobjekt zu befestigen.

5. Messsystem, umfassend:
eine Messvorrichtung (2) nach einem der Ansprüche 1 bis 4;
eine Datenverarbeitungsvorrichtung (1100), die ein Bildgebungsmodul (1112) umfasst, das konfiguriert ist, um ein Bild des Zielobjekts (4) und der Messvorrichtung (2) zu empfangen; und
ein Verarbeitungsmodul (1114), das konfiguriert ist, um mindestens eine geometrische Eigenschaft des Zielobjekts durch Extrahieren aus dem Bild von vergleichenden geometrischen Informationen zwischen der Messvorrichtung und dem Zielobjekt zu schätzen.

## Revendications

1. Un dispositif de mesure (2), comprenant :
une première référence (12) destinée à un alignement contre un premier bord (22) d'un objet cible (4),
une deuxième référence (14) destinée à un alignement contre un deuxième bord (24) de l'objet cible, et
une troisième référence (16) destinée à un alignement contre un troisième bord (26) de l'objet cible,
grâce à quoi chaque référence parmi la première référence, la deuxième référence et la troisième référence comprend une première planchette et une deuxième planchette raccordée à la première planchette, la première planchette de la première référence et la première planchette de la deuxième référence sont respectivement raccordées de manière rotative à la première planchette et à la deuxième planchette de la troisième référence, et
la deuxième planchette de la première référence et la deuxième planchette de la deuxième référence se verrouillent l'une à l'autre de façon à aligner la première référence, la deuxième référence et la troisième référence le long de trois axes dans un système de coordonnées cartésiennes de façon à mesurer des caractéristiques géométriques de l'objet cible.

2. Le dispositif de mesure selon la Revendication 1, où la première référence est alignée sur une direction d'axe x dans le système de coordonnées cartésiennes, la deuxième référence est alignée sur une direction d'axe y dans le système de coordonnées cartésiennes et la troisième référence est alignée sur une direction d'axe z dans le système de coordonnées cartésiennes.

3. Le dispositif de mesure selon la Revendication selon les Revendications 1 ou 2, comprenant en outre au moins un marquage de référence sur la première référence, où le au moins un marquage de référence est positionné vers une extrémité de la première référence, de façon à fournir une mesure de longueur homogène associée à la première référence.

4. Le dispositif de mesure selon l'une quelconque des Revendications précédentes, comprenant en outre une partie de mise en prise (10) adaptée de façon à fixer la première référence, la deuxième référence et la troisième référence à l'objet cible.

5. Un système de mesure, comprenant :
un dispositif de mesure (2) selon l'une quelconque des Revendications 1 à 4,
un dispositif de calcul (1100), comprenant un module d'imagerie (1112) configuré de façon à recevoir une image de l'objet cible (4) et du dispositif de mesure (2), et
un module de traitement (1114) configuré de façon à estimer au moins une caractéristique géométrique de l'objet cible par l'extraction, à partir de l'image, d'informations géométriques comparatives entre le dispositif de mesure et l'objet cible.
